Europäisches Patentamt

**European Patent Office** (11) Publication number: **0 167 212**

Office européen des brevets **B1**

(12) **EUROPEAN PATENT SPECIFICATION**

(45) Date of publication of patent specification: **28.02.90** (51) Int. Cl.⁵: **A 01 B 15/10, A 01 B 3/42**

(21) Application number: **85201039.6**

(22) Date of filing: **28.06.85**

(54) **A plough.**

(30) Priority: **03.07.84 NL 8402106**

(43) Date of publication of application:
**08.01.86 Bulletin 86/02**

(45) Publication of the grant of the patent:
**28.02.90 Bulletin 90/09**

(84) Designated Contracting States:
**CH DE FR GB IT LI NL SE**

(56) References cited:
| | |
|---|---|
| **DE-A-3 218 631** | **US-A-2 326 097** |
| **DE-B-1 301 925** | **US-A-3 162 247** |
| **DE-C- 20 088** | **US-A-3 595 319** |
| **DE-C- 96 751** | **US-A-4 036 305** |
| **DE-C- 274 936** | **US-A-4 062 410** |
| **FR-A-2 030 359** | **US-A-4 141 419** |
| **FR-A-2 517 505** | **US-A-4 319 645** |
| **US-A-1 740 519** | |

(73) Proprietor: **C. van der Lely N.V.**
**Weverskade 10 P.O. Box 26**
**NL-3155 ZG Maasland (NL)**

(72) Inventor: **Van der Lely, Cornelis**
**7 Brüschenrain**
**Zug (CH)**

(74) Representative: **Mulder, Herman et al**
**Octrooibureau Van der Lely N.V. Weverskade 10**
**P.O. Box 26**
**NL-3155 ZG Maasland (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a plough comprising a frame, at least one plough body having a mouldboard and adjustment means for adjusting the orientation of the mouldboard with respect to the intended direction of operative travel of the plough during operation, the adjustment means comprising at least one adjustment cylinder which is actuable from the hydraulic system of a tractor to which the plough is connected.

A plough of this kind is known from the U.S. patent 4,319,645. With this known plough the orientation of at least part of the mouldboard can be changed by means of the adjustment cylinder such that, when working different soil types and with various speeds, an optimal turning and breaking up of the soil could be achieved. However, for the most part the soils are not homogeneous so that during operation the chosen position of the mouldboard not always results in a maximum turning and crumbling of the soil.

The invention now seeks a construction by means of which the orientation of the mouldboard can be changed automatically in connection with the consistence of the soil being worked and the conditions during operation.

In accordance with the invention the adjustment cylinder, additional to the above mentioned actuation, is operable by a control valve which is responsive to tractive power changes, the control valve being fixed to said frame and the said frame being movable rearwardly relative to a trestle for connection to a tractor, such rearward movement actuating the control valve.

This provision makes it possible to obtain automatic adjustment of the mouldboard setting to prevailing soil types and conditions.

The U.S. patent 3,595,319 relates to a construction in which the lifting action of a three-point hitch to which an implement, such as a plough, is fixed can be actuated by means of a draft control, which forms part of the lifting mechanism. The known construction forms a provision against overload.

For a better understanding of the present invention and to show how it may be carried into effect, reference will now be made, by way of example, to the accompanying drawings, in which:

Figure 1 is a plan view of a plough;

Figure 2 is a view on a larger scale taken in the direction of the arrows II in Figure 1;

Figure 3 is a view of part of the plough of Figure 1 showing a modification comprising a manually operated hydraulic adjusting cylinder for adjusting the plough bodies;

Figure 4 corresponds to Figure 3 but is on a larger scale and shows a further modification comprising a hydraulic adjusting cylinder for adjusting the plough bodies automatically;

Figure 5 is a side view, on an enlarged scale, of a plough body equipped with an adjustable mouldboard;

Figure 6 is a view in the direction of the arrow VI in Figure 5; and

Figure 7 is a view in the direction of the arrow VII in Figure 5.

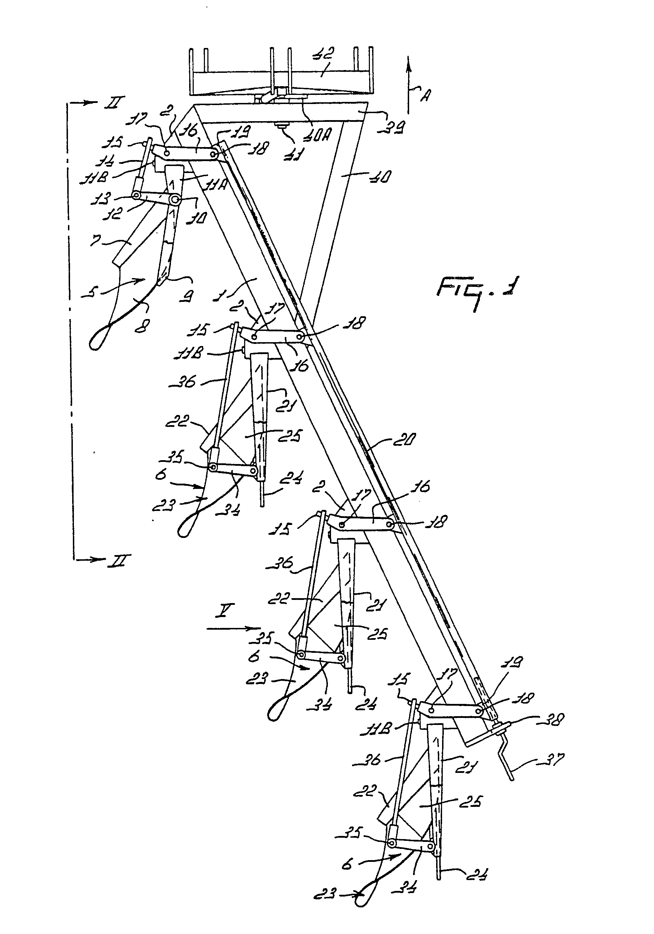

The plough shown in Figure 1 is constructed as a reversible plough, and comprises a straight frame beam 1 which extends horizontally at an angle of approximately 30° to the intended direction A of operative travel of the plough. Four regularly spaced pairs of plough bodies 5 and 6 are disposed on one side of the frame beam 1, and are secured to the beam 1 by supports 2. The supports 2 for the plough bodies 5 and 6 of each pair are fixed to the frame beam 1 near the ends of the beam 1 and at positions between its ends. Each of the bodies 5 of the front pair comprises a share 7 and a mouldboard 8 attached to it; these two bodies are connected to their support 2 by two divergent arms 9 which slope forwardly towards the beam 1. Each of the arms 9, which are practically straight, is fixed at its front end to a vertical or almost vertical hinge pin 10, which is held by sockets 11 secured to the rear of the support 2 by a carrier 11A and a horizontal or almost horizontal transverse shaft 11B so that they can swivel with respect to the support 2. In addition there is an overload safety device, not illustrated, so that in the event of overloading during operation the plough body can swivel backwards and upwards out of harm's way.

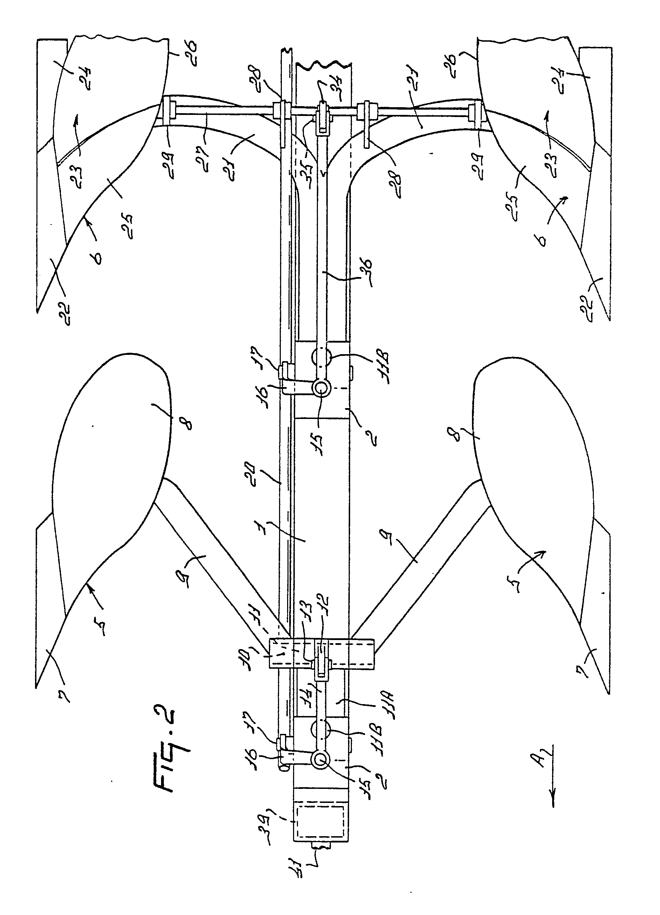

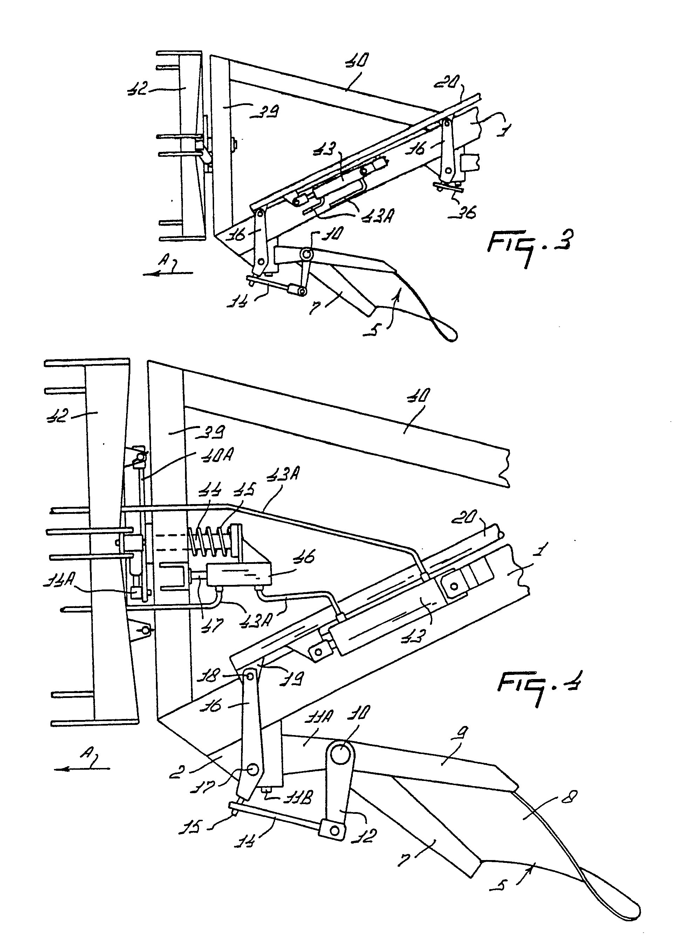

As is plain from Figures 1 and 2, the hinge pin 10 is situated at substantially the same position along the beam 1 as the point of the share 7 (figures 1 and 2). Between the sockets 11 the hinge pin 10 is provided with an adjustment arm 12, which extends horizontally or almost horizontally away from the beam 1 (Figure 1). The adjustment arm 12 is pivotally connected by a pin 13 to a rod 14. The rod 14 is pivotally connected by a horizontal or almost horizontal transverse shaft 15 to one end of a lever 16, which is pivotable about a vertical or almost vertical pin 17 on top of the support 2. The other end of the lever 16 is pivotable about a vertical or almost vertical pin .18 received in a socket 19 on a rod 20, which extends parallel to the beam 1. The rod 20, as seen from above, is on the opposite side of the beam 1 from the bodies 5 and 6.

The plough bodies of each pair of bodies 6 are each attached to a respective support 2 by means of arms 21 and a hinge pin 11B, which in the same way as for the bodies 5 is part of an overload safety device. Each of the arms 21 extends forwardly from each body 6 in a smooth curve, horizontal or almost horizontal parts of the arms 21 lying against each other (Figure 2) and being connected to the pin 11B and the rest of the overload safety device (not illustrated).

Each plough body 6 comprises a share 22, a mouldboard 23 joined to it and a beak coulter 24. The share 22 and the mouldboard 23 correspond as regards shape and size to the share 17 and the mouldboard 8 of each of the bodies 5. The mouldboard 23 comprises a front part 25 fixed to the share 22 and extending at the bottom somewhat further than two-thirds of the way along the share (Figures 5 and 6). The rear part 26 of the mouldboard 23, which at the bottom extends over approximately one third of the length of the top of the share 22, has a portion which lies to the rear of the part 25 and so overlaps the part 25. The rear part 26 is pivotable on a hinge pin 27 which extends vertically or almost vertically and is freely pivotably connected to the arms 21 by lugs 28 and 29, so that there is a single hinge pin 27 for each pair of plough bodies 6 (Figure 2).

The back part 26 of the mouldboard 23 of each body 6 can pivot with the hinge pin 27 with respect to the front part 25 of the mouldboard 23, which is fixed to the share 22. This pivoting is achieved by means of strips 30 and 31, which extend horizontally or almost horizontally, the broader sides of which extend horizontally, and a bush 32, which is fixed to the hinge pin 27. The hinge pin 27, as seen from above, is situated outside the mouldboard (Figure 6).

For swivelling, each hinge pin 27 for each pair of bodies 6 is fitted near the middle with an adjustment arm 34, which is horizontal or almost horizontal and extends transversely or almost transversely with respect to the direction A. The end of the adjustment arm 34 away from the hinge pin 27 is pivotally connected to one end of a rod 36 by means of a vertical or almost vertical hinge pin 35. The rod 36 extends in the direction A and is horizontal or almost horizontal. The other end of each rod 36 is connected to a lever 16 by a horizontal or almost horizontal hinge pin 15. The lever 16 is mounted in the same way as that of the plough bodies 5 and is connected to the rod 20. The rod 20, which extends parallel to the beam 1, is adjustable lengthwise of the beam by means of a screwthreaded spindle 27 mounted at the rear. The screwthreaded spindle 37 can be slid in a slot in lug 38, which is fixed to the rear end of the beam 1. By turning the spindle 27, the rod 20 is displaced lengthwise, and it is thus possible via the levers 16, the rods 14 and 36 and the arms 12 and 34 to change the orientation, with respect to the direction A, of the front bodies 5 and of the rear parts 26 of the mould boards 23 of the bodies 6. Thus the plough can be attuned to plough speed preferred for the prevailing soil type or conditions. In this way it is possible, independently of the type of soil to be worked and without sacrificing an optimal turning of the soil, to keep to the most favourable speed, since it is possible, taking account of the desired speed, to adjust the setting or angle of the front plough body or alternatively the setting or angle of the mould board of the rear plough bodies 6 with respect to the direction A. Adjustment of the front body 5, during which the share 7 also pivots along with the mouldboard, likewise produces an adjustment of the mouldboard such that the soil can move over the mouldboard in the best possible way for the speed selected. Because it alters the setting of the share, adjustment of a body 5 also produces a change in the working width. Because the bodies 6 are fitted only with mouldboard adjustment, these bodies can be used with the beak coulter 24 to obtain sufficient support against sideways reaction forces. In a construction in which the whole of all the plough bodies is adjustable, the reaction forces must be absorbed is some other way. This is unnecessary if all plough bodies are adjustable in the manner of the bodies 6.

At the front of the frame beam 1 there is a cross member 39 which is fixed at one end to the beam 1. A strut 40 is fixed to the opposite end of the cross member 39. The cross member 39 is connected to a trestle 42 by a hinge pin 41 which extends in the direction A. A reversing mechanism 40A which may be of known construction is provided for turning the cross member 39 through 180° relative to the trestle 42, by which the plough may be coupled to the three-point lifting device of a tractor. This produces a reversible plough with four pairs of plough bodies constructed and fitting as above.

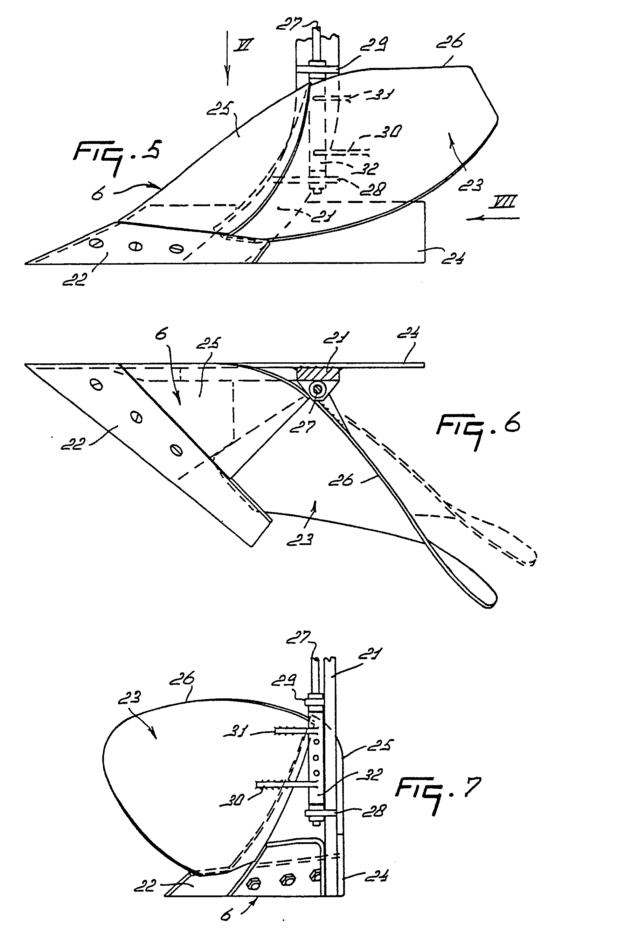

Adjustment of the rod 20 to adjust the plough bodies 5 or the mouldboards 23 of the plough bodies 6 can alternatively be effected by hydraulic means, so that the adaption to soil type and conditions can be achieved from a tractor. This hydraulic adjustment can be achieved by means of an adjustment cylinder 43 (Figure 3), operated manually via the tractor's hydraulic system, to which the cylinder 43 is connected by lines 43A. It is also possible for the adjustment cylinder 43 to be operated by an automatic device designed to react to the load on the plough. For this purpose the hinge pin 41 is replaced by a shaft 44 (Figure 4), along which the cross member 39 can be moved in the direction A against the action of a spring 45 surrounding part of the shaft. At the rear end of the shaft 44 there is a control valve 46 which is connected between the tractor's hydraulics and the adjustment cylinder 43. The operating member 47 of the control valve 46 is connected to the cross member 39. If, now, the plough becomes more heavily loaded during forward motion at a particular speed, for example because the soil composition becomes heavier, or because weather conditions have made the soil more difficult to work, then the frame beam 1, with the cross member 39, moves backwards along the shaft 44 against the action of the spring 45, so that the operating arm 47 of the control valve 46 is actuated and the adjustment cylinder 43, supplied from the tractor's hydraulic system, adjusts the rod 20, which extends along the beam 1, so that the mouldboards of the plough bodies 5 and 6 are together set to a modified setting which is again the optimum for the new conditions.

Using the means described above for the collective adjustment of the angle that the plough bodies and mouldboards make with the direction A, it is possible, before starting ploughing and selecting a particular tractor speed, to establish a particular mouldboard setting so that, even if there are several different types of soil on the field to be worked, it is possible to work the whole area satisfactorily while maintaining a constant speed. It is also possible, for example, to work faster than before, since it is possible to set the mouldboards to a setting better suited to the higher tractor speed. Similarly, it is possible to control the turning of the soil and its pulverization much more effectively in combination with the tractor speed and also to use the same plough at all times.

Hydraulic adjustment, particularly automatic hydraulic adjustment, is well suited to the modern tractor because it is possible to adjust, or maintain adjustment, of the mouldboards to the most favourable setting from the driver's cab.

Because the shaft 11B of the overload safety device is located close to the shafts 15 of the rod system for the adjustment of the mouldboards, the plough bodies can swing backwards without difficulty. At the same time it is possible, if necessary, to introduce an extra degree of play in the hinge point enclosing the shaft 15. The rod system for adjusting the mouldboards to prevailing conditions is so constructed that arms 12 and 34 are relatively short and arms 14 and 36 run more or less in the direction A, so that some of the reaction forces are directed along these rods.

## Claims

1. A plough comprising a frame (1), at least one plough body (6) having a mouldboard (23) and adjustment means (43) for adjusting the orientation of the mouldboard (23) with respect to the intended direction (A) of operative travel of the plough during operation, said adjustment means comprising at least one adjustment cylinder (43) which is actuable from the hydraulic system of a tractor to which the plough is connected, characterized in that the adjustment cylinder (43), additional to the abovementioned actuation, is operable by a control valve (46) which is responsive to tractive power changes, the control valve (46) being fixed to the said frame, the said frame together with the said plough body being movable rearwardly relative to a trestle (42) for connection to the tractor, such rearward movement actuating the control valve (46).

2. A plough as claimed in claim 1, characterized in that said frame (1) is movable with respect to the trestle (42) against the action of a spring (45).

3. A plough as claimed in claim 2, characterized in that the said spring (45) surrounds part of a shaft (44) that is mounted on the trestle (42) and along which the said frame (1) is rearwardly movable against the action of said spring (45), the said control valve (46) being mounted on the said shaft (44) and with its operating member (47) connected to the said frame (1).

4. A plough as claimed in any one of the preceding claims, characterized in that the mouldboard (23) of the plough body (6) is adjustable about a substantially vertical hinge pin (27).

5. A plough as claimed in any one of the preceding claims, characterized in that the plough body (6) comprises a share (22) to which the said mouldboard (23) is connected, a part (26) of the mouldboard (23) being pivotable about a substantially vertical hinge pin (27) relatively to the remaining part (25) of the plough body (6).

6. A plough as claimed in claim 5, characterized in that the pivotable part (26) of the mouldboard (23) comprises the major part of the mouldboard and is disposed behind the remaining part (25) of the mouldboard (23).

7. A plough as claimed in claim 5 or 6, characterized in that the two parts (25, 26) of the mouldboard (23) overlap each other.

8. A plough as claimed in any one of claims 4 to 7, characterized in that the hinge pin (27) of the part (26) of the mouldboard (23) is disposed near the back of the share (22) with respect to the intended direction (A) of operative travel of the plough and as viewed from the side.

9. A plough as claimed in any one of claims 5 to 8, characterized in that the hinge pin (27) is disposed on the side of the mouldboard (23) facing away from the share (22).

10. A plough as claimed in any one of claims 5 to 9, characterized in that the remaining part (25) of the mouldboard (23) is fixed, and extends over approximately 2/3 of the length of the share (22).

## Patentansprüche

1. Pflug mit einem Rahmen (1), mindestens einem ein Streichblech (23) aufweisenden Pflugkörper (6) und einer Stelleinrichtung (43) zur Lageausrichtung des Streichbleches (23) in bezug auf die Arbeitsrichtung (A) des Pfluges, wobei die Stelleinrichtung mindestens einen Stellzylinder (43) aufweist, der vom hydraulischen System des Schleppers zu beaufschlagen ist, an den der Pflug angeschlossen ist, dadurch gekennzeichnet, daß der Zylinder (43), zusätzlich zu der genannten Beaufschlagung, über ein Steuerventil (46) zu betätigen ist, das auf Zugkraftänderungen anspricht, und das an dem Rahmen befestigt ist, der zusammen mit dem Pflugkörper relativ zu einem für den Schlepperanbau vorgesehenen Anbaubock (42) durch Betätigung des Steuerventils (46) rückwärs bewegbar ist.

2. Pflug nach Anspruch 1, dadurch gekennzeichnet, daß der Rahmen (1) relativ zu dem Anbaubock (42) gegen die Kraft einer Feder (45) bewegbar ist.

3. Pflug nach Anspruch 2, dadurch gekennzeichnet, daß die Feder (45) einen Teil einer Achse (44) umgibt, die an dem Anbaubock (42) angeordnet ist, wobei der Rahmen (1) gegen die Kraft der Feder (45) längs der Achse bewegbar ist, und daß das Steuerventil (46) an der Achse (44) befestigt und mit seinem Betätigungsglied (47) mit dem Rahmen (1) verbunden ist.

4. Pflug nach einem der vorhergehenden Ansprüche, dadurch gekennzeichnet, daß das Streichblech (23) des Pflugkörpers (6) um einen im wesentlichen vertikalen Gelenkstift (27) verstellbar ist.

5. Pflug nach einem der vorhergehenden Ansprüche, dadurch gekennzeichnet, daß der Pflugkörper (6) ein Schar (22) aufweist, mit dem das Streichblech (23) verbunden ist, und daß ein Teil (26) des Streichbleches (23) um einen im wesentlichen vertikalen Gelenkstift (27) relativ zu dem übrigen Teil des Pflugkörpers (6) schwenkbar ist.

6. Pflug nach Anspruch 5, dadurch gekennzeichnet, daß der schwenkbare Teil (26) des Streichbleches (23) den größten Teil des Streichbleches bildet und hinter dem verbleibenden Teil (25) des Streichbleches (23) angeordnet ist.

7. Pflug nach Anspruch 5 oder 6, dadurch gekennzeichnet, daß die beiden Teile (25, 26) des Streichbleches (23) einander überlappen.

8. Pflug nach einem der Ansprüche 4 bis 7, dadurch gekennzeichnet, daß der Gelenkstift (27) des Teiles (26) des Streichbleches (23) in Seitenansicht nahe der Rückseite des Schares (22) angeordnet ist, bezogen auf die Arbeitsrichtung (A).

9. Pflug nach einem der Ansprüche 5 bis 8, dadurch gekennzeichnet, daß der Gelenkstift (27) auf der von dem Schar (22) abgewandten Seite des Streichbleches (23) angeordnet ist.

10. Pflug nach einem der Ansprüche 5 bis 9, dadurch gekennzeichnet, daß der übrige Teil (25) des Streichbleches (23) fixiert ist und sich über annähernd zwei Drittel der Länge des Schares (22) erstreckt.

**Revendications**

1. Charrue comprenant un chassis (1), au moins un corps de charrue (6) ayant un versoir (23) et des moyens de réglage (43) pour régler l'orientation du versoir (23) par rapport au sens de marche (A) prévu pour le travail de la charrue, lesdits moyens de réglage comprenant au moins un vérin de réglage (43) pouvant être actionné à partir du système hydraulique d'un tracteur auquel la charrue est reliée, caractérisée en ce que le vérin de réglage (43) est, additionnellement à l'actionnement précité, susceptible d'être actionné par une vanne de commande (46) qui réagit aux changements de la puissance de traction, la vanne de commande (46) étant fixée audit chassis, ledit chassis, ensemble avec ledit corps de charrue, étant mobile vers l'arrière par rapport à une chèvre (42) de liaison au tracteur, ce mouvement vers l'arrière actionnant la vanne de commande (46).

2. Charrue selon la revendication 1, caractérisée en ce que ledit chassis (1) est mobile par rapport à la chèvre (42) contre l'action d'un ressort (45).

3. Charrue selon la revendication 2, caractérisée en ce que ledit ressort (45) entoure une partie d'un arbre (44) qui est monté sur la chèvre (42) et le long duquel ledit chassis (1) est mobile vers l'arrière contre l'action dudit ressort (45), ladite vanne de commande (46) étant montée sur ledit arbre (44) et avec son organe d'actionnement (47) relié audit chassis (1).

4. Charrue selon l'une quelconque des revendications précédentes, caractérisée en ce que le versoir (23) du corps de charrue (6) est réglable autour d'un pivot d'articulation (27) sensiblement vertical.

5. Charrue selon l'une quelconque des revendications précédentes, caractérisée en ce que le corps de charrue (6) comprend un soc (22) auquel ledit versoir (23) est relié, une partie (26) du versoir (23) étant pivotante autour d'un pivot (27) sensiblement vertical par rapport à la partie restante (25) du corps de charrue (6).

6. Charrue selon la revendication 5, caractérisée en ce que la partie pivotante (26) du versoir (23) comprend la majeure partie du versoir et est disposée derrière la partie restante (25) du versoir (23).

7. Charrue selon la revendication 5 ou 6, caractérisée en ce que les deux parties (25, 26) du versoir (23) se recouvrent partiellement l'une l'autre.

8. Charrue selon l'une quelconque des revendications 4 à 7, caractérisée en ce que le pivot (27) de la partie (26) du versoir (23) est disposé près du dos du soc (22) par rapport au sens de marche (A) prévu pour le travail de la charrue, et en étant vu de côté.

9. Charrue selon l'une quelconque des revendications 5 à 8, caractérisée en ce que le pivot (27) de la partie (26) du versoir (23) est disposé sur le côté du versoir (23) opposé au soc (22).

10. Charrue selon l'une quelconque des revendications 5 à 9, caractérisée en ce que la partie restante (25) du versoir (23) est fixe et s'étend sur approximativement deux tiers de la longueur du soc (22).

FIG. 1

FIG.2

EP 0 167 212 B1

FIG. 3

FIG. 4

3

FIG.5

FIG.6

FIG.7